# EUROPEAN PATENT APPLICATION

(11) **EP 0 852 382 A1**
(43) Date of publication of application: **08.07.1998**
(21) Application number: 95931427.9
(22) Date of filing: 18.09.1995
(51) Int. Cl.: G21C 15/243, F04D 7/08

(54) **INTERNAL PUMP**

(71) Applicant: Hitachi, Ltd., Chiyoda-ku, Tokyo 101-0062 (JP)
(72) Inventor: KIKUSHIMA, Jun, Ishioka-shi (JP); HAYASHI, Youjiro, Ibaraki 300 (JP); UEDA, Masayuki 3-11-3, Inayoshiminami, Ibaraki 315 (JP)
(74) Representative: Hano, Christian, Dipl.-Ing.
(86) International application number: JP9501848
(87) International publication number: WO9711469

(57) **Abstract**

The present invention relates to an internal pump.

A water pass hole (33) through which inner and outer peripheries of a stretch tube (24) are communicated with each other, is formed in a portion of the stretch tube corresponding to a joint between and end face of a nozzle section (14a) of a motor case (14) and an end face of a diffuser (13), so that high temperature reactor water in a pressure vessel (1) entering through the joint between the end face of the nozzle section (14a) of the motor case and the end face of the diffuser (13) is made to merge into purge water so as to be returned into the pressure vessel (1) again.

## Description

### TECHNICAL FIELD

This invention relates to an internal pump provided at the bottom of a pressure vessel of a nuclear reactor for circulating a reactor coolant.

### BACKGROUND ART

In an example of conventional internal pump disclosed in Japanese Patent Unexamined Publication No. 58-211595, an impeller, a diffuser and a stretch tube are housed in a pressure vessel of a nuclear reactor, while a pump shaft, a motor stator, a motor rotor, upper and lower journal bearings, a thrust bearing and the like are housed in a motor case. The pump shaft and the stretch tube are so disposed as to extend inside and outside the pressure vessel, the temperature of their upper parts being high (about 250 degrees) approaching the reactor water temperature and the temperature of their lower parts being low (about 100 degrees or less). In order to prevent the reactor water from entering the motor case, the stretch tube is formed in a lower portion thereof with a water pass hole through which purge water is passed. Further, in order to prevent the high temperature reactor water from entering the motor case through a joint between an end face of a nozzle section of the motor case and an end face of the diffuser, a seal member is interposed at the joint between the end face of the nozzle section of the motor case and the end face of the diffuser.

In the internal pump having the above structure, if the sealing performance of the seal member interposed at the joint between the end face of the nozzle section of the motor case and the end face of the diffuser is deteriorated, high temperature reactor water is allowed to enter from pressure vessel of the nuclear reactor through the joint described above. The high temperature reactor water thus entered flows down to a low temperature section passing through between an outer periphery of the stretch tube and an inner periphery of the nozzle section of the motor case, and then is merged into a flow of purge water, so that the high temperature reactor water is caused to flow upwards passing through between the pump shaft and an inner periphery of the stretch tube so as to be returned into the reactor pressure vessel.

An object of the present invention is to provide an internal pump in which even if high temperature reactor water in a pressure vessel enters the internal pump, the high temperature reactor water is returned into the reactor pressure vessel without being allowed to reach a low temperature section.

### DISCLOSURE OF INVENTION

In order to achieve this end, there is provided according to the present invention an internal pump which comprises a pressure vessel housing a nuclear reactor, a motor case housing a motor for driving an impeller, a diffuser surrounding the impeller and disposed on the motor case, a stretch tube inserted in a nozzle section of the motor case for fixing the diffuser on the nozzle section of the motor case, and a pump shaft inserted in the stretch tube for connecting the impeller to a motor, purge water being made to flow through between the pump shaft and the stretch tube, wherein a water pass hole, through which inner and outer peripheries of the stretch tube are communicated with each other, is formed in a portion of the stretch tube corresponding to a joint between an end face of the motor case and an end face of the diffuser, so that high temperature reactor water in the pressure vessel entering through the joint between the end face of the motor case and the end face of the diffuser is made to merge into the purge water so as to be returned into the pressure vessel again.

Further, according to the present invention, the above object can be achieved by an internal pump which comprises a pressure vessel housing a nuclear reactor, a motor case comprising a section housing a motor for driving an impeller and a nozzle section extending from the motor housing section and installed at the bottom of the pressure vessel penetrating through the bottom of the pressure vessel, the nozzle section having a smaller diameter than the motor housing section, a diffuser surrounding the impeller and disposed on the nozzle section of the motor case, a stretch tube inserted in the nozzle section of the motor case for fixing the diffuser on the nozzle section of the motor case, and a pump shaft inserted in the stretch tube for connecting the impeller to the motor, purge water being made to flow through between the pump shaft and the stretch tube, wherein an annular groove is formed in a portion of an outer peripheral surface of the stretch tube corresponding to a joint between an end face of the nozzle section of the motor case and an end face of the diffuser, the annular groove having a plurality of water pass holes through which inner and outer peripheries of the stretch tube are communicated with each other, so that high temperature reactor water in the pressure vessel entering through the joint between the end face of the nozzle section of the motor case and the end face of the diffuser is made to merge into the purge water so as to be returned into the pressure vessel again.

Moreover, according to the present invention, the above object can be achieved by an internal pump wherein an annular groove is formed in a portion of an inner peripheral edge of each of the nozzle section of the motor case and the diffuser corresponding to a joint between an end face of the nozzle section of the motor case and an end face of the diffuser, and a plurality of water pass holes, through which inner and outer peripheries of the stretch tube are communicated with each other, are formed in those portions of the stretch tube corresponding to these annular grooves, so that high temperature reactor water in the pressure vessel entering through the joint between the end face of the nozzle section of the motor case and the end face of the diffuser is made to merge into the purge water so as to be returned into the pressure vessel again.

In addition, according to the present invention, the above object can be achieved by an internal pump wherein an annular groove is formed in a portion of an inner peripheral edge of the diffuser corresponding to a joint between an end face of the nozzle section of the motor case and an end face of the diffuser, and a plurality of water pass holes, through which inner and outer peripheries of the stretch tube are communicated with each other, are formed in those portions of the stretch tube corresponding to the annular groove, so that high temperature reactor water in the pressure vessel entering through the joint between the end face of the nozzle section of the motor case and the end face of the diffuser is made to merge into the purge water so as to be returned into the pressure vessel again.

Still furthermore, according to the present invention, the above object can be achieved by an internal pump wherein an annular groove is formed in a portion of an inner peripheral edge of the nozzle section of the motor case corresponding to a joint between an end face of the nozzle section of the motor case and an end face of the diffuser, and a plurality of water pass holes, through which inner and outer peripheries of the stretch tube are communicated with each other, are formed in those portions of the stretch tube corresponding to the annular groove, so that high temperature reactor water in the pressure vessel entering through the joint between the end face of the nozzle section of the motor case and the end face of the diffuser is made to merge into the purge water so as to be returned into the pressure vessel again.

With the above construction, function is as follows.

The water pass hole, through which the inner and outer peripheries of the stretch tube are communicated with each other, is formed in a portion of the stretch tube corresponding to the joint between the end face of the motor case and the end face of the diffuser, and therefore, even if the high temperature reactor water enters through the joint between the end face of the motor case and the end face of the diffuser attributed to the deterioration of the performance of the seal member, the reactor water thus entered is made to flow directly in between the pump shaft and the inner peripheral surface of the stretch tube through the water pass hole, and then the reactor water flowed in between the pump shaft and the stretch tube is merged into the purge water fed through a purge water inlet port so as to be returned into the pressure vessel of the nuclear reactor again.

### BRIEF DESCRIPTION OF DRAWINGS

Fig. 1 is a vertical sectional view of a nuclear reactor in which an internal pump according to the present invention is incorporated;
Fig. 2 is a detailed vertical sectional view of an internal pump according to an embodiment of the invention;
Fig. 3 is a fragmentary detailed vertical sectional view of the internal pump shown in Fig. 2;
Fig. 4 is a fragmentary vertical sectional view of an internal pump according to another embodiment of the invention;
Fig. 5 is a fragmentary vertical sectional view of an internal pump according to still another embodiment of the invention;
Fig. 6 is a fragmentary vertical sectional view of an internal pump according to a further embodiment of the invention;
Fig. 7 is a fragmentary vertical sectional view of an internal pump according to a still further embodiment of the invention; and
Fig. 8 is a fragmentary vertical sectional view of an internal pump according to a different embodiment of the invention.

### BEST MODE FOR CARRYING OUT THE INVENTION

Now, preferred embodiments of the present invention will be described below with reference to the drawings.

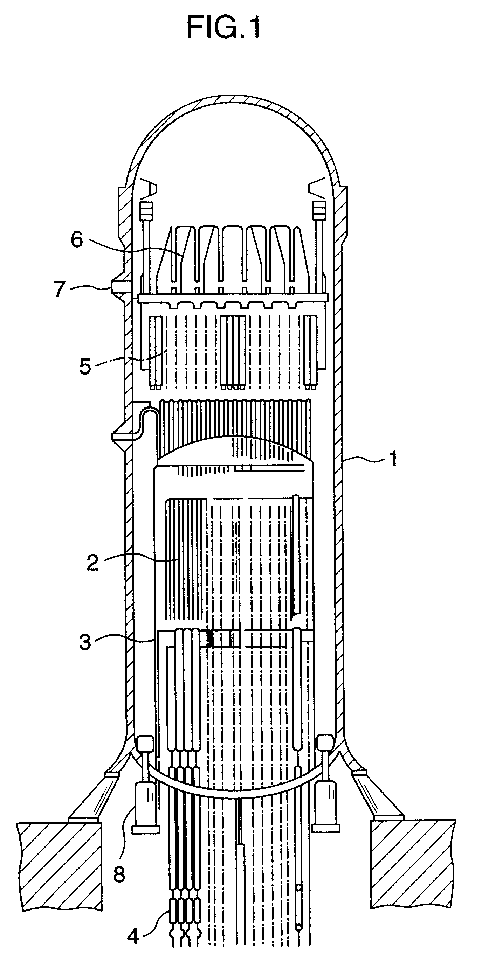

Fig. 1 is a schematic vertical sectional view of a boiling-water reactor. Reference numeral 1 denotes a pressure vessel of the reactor. A shroud 3 encircling a core 2 is provided in the pressure vessel 1. Control rods 4 are mounted in the core 2 for controlling the reactivity of the core 2. Steam generated in the core 2 is made to pass through a steam-water separator 5 where water is removed, and then dried by a steam drier 6. The steam dried is fed through a main steam port 7 into turbine (not shown) via a main steam pipe.

A plurality of internal pumps 8 are provided at the bottom of the pressure vessel 1 for serving to circulate reactor water in the pressure vessel 1 of the nuclear reactor.

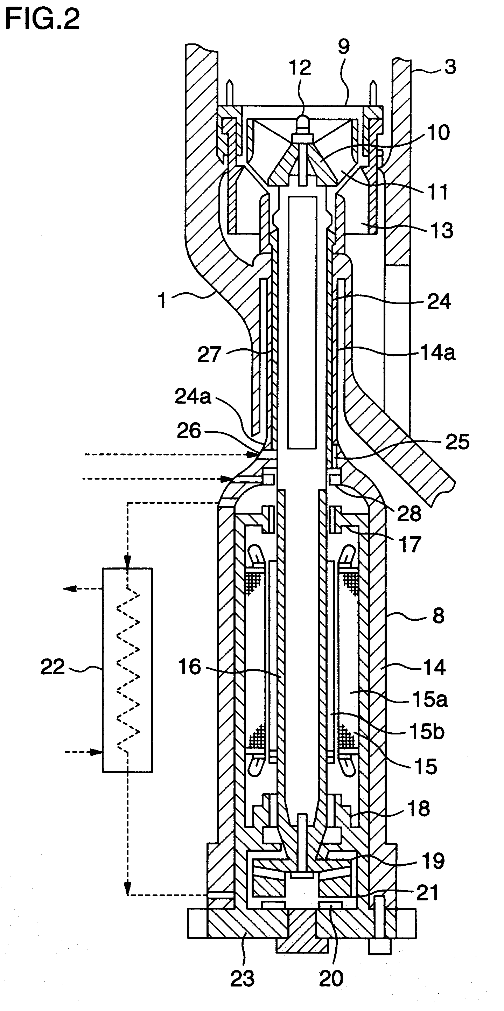

Fig. 2 is a vertical sectional view of the internal pump 8.

Reference numeral 9 denotes a pump body in which an impeller 11 having a plurality of blades is mounted on a hub 10. A lifting member 12 for lifting them is attached to the pump body 9. A diffuser 13 is disposed to surround the impeller 11.

The pump body 9 of the internal pump 8 is disposed in an annular passage defined between the reactor pressure vessel 1 and the shroud 3 for serving to circulate the reactor water in a direction to flow downward from the top in the drawing. Reference numeral 14 denotes a motor case which is welded to the bottom of the pressure vessel 1. A wet type motor 15 is mounted in the motor case 14. Reference numerals 15a and 15b denote a stator and a rotor, respectively. The wet type motor 15 and the impeller 11 of the pump body 9 are connected through a pump shaft 16. The pump shaft 16 is supported by radial bearings 17, 18 and thrust bearings 19, 20. An auxiliary impeller 21 serves to make the reactor water in the motor case 14 circulate as shown by arrows in the drawing through a heat exchanger 22 so as to keep the temperature in the motor case 14 constant. Reference numeral 23 denotes a cover of the motor case 14. A sleeve-like stretch tube 24 is inserted in a nozzle section 14a of the motor case 14. The stretch tube 24 is pulled downward by means of a stretch tube nut 25 screwed onto a lower end of the stretch tube 24 so that the diffuser 13 is fixed and firmly mounted on the nozzle section 14a. Reference numeral 26 denotes a purge water inlet port from which the purge water is fed into a narrow gap 27 defined between the stretch tube 24 and the pump shaft 16 through an opening 24a attached to the stretch tube 24.

Feeding the purge water prevents the reactor water in the pressure vessel 1 and the cooling water in the motor case 14 from flowing into each other through the narrow gap 27. Reference numeral 28 denotes a secondary seal which is caused to work at the time of inspection.

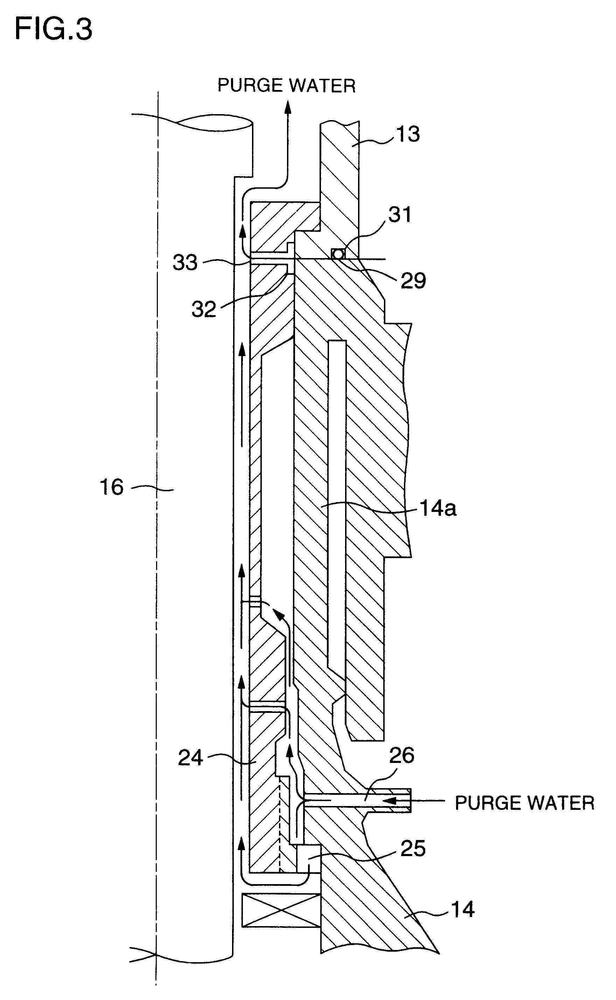

Fig. 3 is a more detailed fragmentary vertical sectional view of the internal pump 8.

Reference numeral 29 denotes a seal member disposed at a joint between the diffuser 13 and the nozzle section 14a of the motor case, the seal member 29 being fitted in an annular groove 31 formed in a lower end portion of the diffuser 13. Reference numeral 32 denotes an annular groove formed in an outer peripheral surface of the stretch tube 24, the annular groove 32 having a plurality of radial water pass holes 33 through which the inner and outer peripheries of the stretch tube 24 are communicated with each other.

Now, operation of the internal pump having the above-described structure will be described.

When purge water is let in through the purge water inlet port 26, the purge water is made to flow through between the pump shaft 16 and the stretch tube 24 in the direction of the arrows so as to be returned into the pressure vessel 1 of the nuclear reactor from the top of the pump. Since the purge water is made flow in this manner, the high temperature reactor water from the pressure vessel 1 can be prevented from passing through between the pump shaft 16 and the stretch tube 24 to flow toward a low temperature section located in the lower part of the drawing. Even if the sealing performance of the seal member 29 is deteriorated to allow the high temperature reactor water in the pressure vessel 1 to enter through the joint between the upper end surface, in the drawing, of the nozzle section 14a of the motor case and the lower end surface, in the drawing, of the diffuser 13 (these upper and lower end surfaces being generally in contact with each other) as shown by the arrows, the high temperature reactor water entered is merged in the purge water and made to flow upwards from the water pass hole 33 so as to be returned into the pressure vessel 1 of the reactor again, thereby making it possible to prevent the high temperature reactor water from flowing toward the low temperature section located in the lower part.

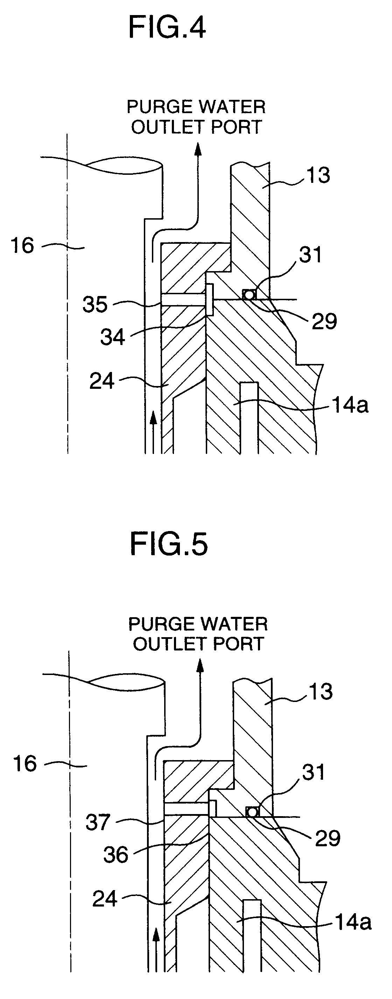

Fig. 4 is a fragmentary detailed sectional view of an internal pump according to another embodiment of the invention.

An annular groove 34 is formed in a portion of the joint between the end face of the nozzle section 14a of the motor case and the end face of the diffuser 13 corresponding to the inner peripheral edges of the nozzle section 14a of the motor case and the diffuser 13. A plurality of water pass holes 35, through which the inner and outer peripheries of the stretch tube 24 are communicated with each other, are formed in those portions of the stretch tube 24 corresponding to the annular groove 34 so that the high temperature reactor water in the pressure vessel 1 entering through the joint between the end face of the nozzle section 14a of the motor case and the end face of the diffuser 13 is made to merge into the purge water so as to be returned into the reactor pressure vessel 1 again.

According to this embodiment, it is possible to reduce the deterioration of the strength of the stretch tube 24 as compared with the embodiment of Fig. 3.

Fig. 5 is a fragmentary detailed sectional view of an internal pump according to still another embodiment of the invention.

An annular groove 36 is formed in a portion of the joint between the end face of the nozzle section 14a of the motor case and the end face of the diffuser 13 corresponding to the inner peripheral edge of the diffuser 13. A plurality of water pass holes 37, through which the inner and outer peripheries of the stretch tube 24 are communicated with each other, are formed in those portions of the stretch tube 24 corresponding to the annular groove 36 so that the high temperature reactor water in the pressure vessel 1 entering through the joint between the end face of the nozzle section 14a of the motor case and the end face of the diffuser 13 is made to merge into the purge water so as to be returned into the reactor pressure vessel 1 again.

According to this embodiment, the stretch tube 24 can be manufactured more easily as compared with the embodiment of Fig. 3.

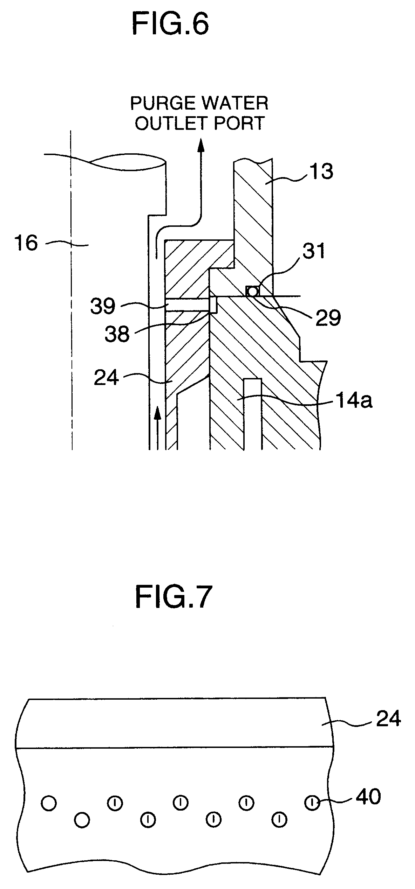

Fig. 6 is a fragmentary detailed sectional view of a further embodiment of the invention.

An annular groove 38 is formed in a portion of the joint between the end face of the nozzle section 14a of the motor case and the end face of the diffuser 13 corresponding to the inner peripheral edge of the nozzle section 14a of the motor case. A plurality of water pass holes 39, through which the inner and outer peripheries of the stretch tube 24 are communicated with each other, are formed in those portions of the stretch tube 24 corresponding to the annular groove 38 so that the high temperature reactor water in the pressure vessel 1 entering through the joint between the end face of the nozzle section 14a of the motor case and the end face of the diffuser 13 is made to merge into the purge water so as to be returned into the reactor pressure vessel 1 again.

According to this embodiment, manufacture is facilitated as compared with the embodiment of Fig. 4, because it suffices to work only in a portion of the nozzle section 14a of the motor case corresponding to the stretch tube 24.

Fig. 7 is a fragmentary detailed sectional view of a still further embodiment of the invention.

This drawing is an expansion plan of the stretch tube 24 in which water pass holes 40 are arranged circumferentially in a zigzag manner.

According to this embodiment, the deterioration of the strength of the stretch tube 24 can be reduced as compared with the case in which water pass holes 39 are arranged circumferentially in a straight line.

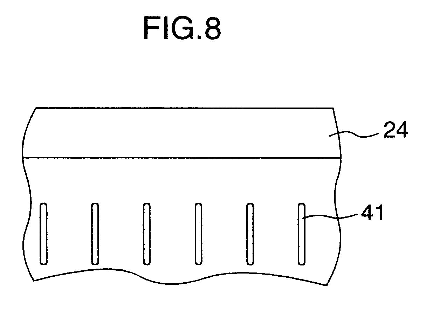

Fig. 8 is a fragmentary detailed sectional view of a different embodiment of the invention.

This drawing is an expansion plan of the stretch tube 24 in which water pass holes 41 are formed to have a slit-like cross section.

According to this embodiment, it is possible to increase the cross sectional area of the water pass hole without deteriorating the strength of the stretch tube 24 as compared with the case in which the water pass holes 39 are formed to have a circular cross section.

As has been described above, according to the present invention, even if the high temperature reactor water in the pressure vessel enters through the joint between the end face of the nozzle section of the motor case and the end face of the diffuser attributed to the deterioration of the sealing performance of the seal member used in the internal pump, the high temperature reactor water thus entered is merged in the purge water so as to be returned into the pressure vessel of the reactor again, and therefore the reactor water can be prevented from flowing toward the low temperature section.

## Claims

1. An internal pump comprising:
a pressure vessel housing a nuclear reactor;
a motor case housing a motor for driving an impeller;
a diffuser surrounding said impeller and disposed on said motor case;
a stretch tube inserted in a nozzle section of said motor case for fixing said diffuser on said nozzle section of said motor case; and
a pump shaft inserted in said stretch tube for connecting said impeller to a motor, purge water being made to flow through between said pump shaft and said stretch tube,
wherein a water pass hole, through which inner and outer peripheries of the stretch tube are communicated with each other, is formed in a portion of the stretch tube corresponding to a joint between an end face of said motor case and an end face of the diffuser, so that high temperature reactor water in the pressure vessel entering through the joint between the end face of the motor case and the end face of the diffuser is made to merge into said purge water so as to be returned into the pressure vessel again.

2. An internal pump comprising:
a pressure vessel housing a nuclear reactor;
a motor case comprising a section housing a motor for driving an impeller and a nozzle section extending from said motor housing section and installed at the bottom of said pressure vessel penetrating through the bottom of said pressure vessel, said nozzle section having a smaller diameter than said motor housing section;
a diffuser surrounding said impeller and disposed on said nozzle section of said motor case;
a stretch tube inserted in said nozzle section of said motor case for fixing said diffuser on said nozzle section of said motor case; and
a pump shaft inserted in said stretch tube for connecting said impeller to said motor, purge water being made to flow through between said pump shaft and said stretch tube,
wherein an annular groove is formed in a portion of an outer peripheral surface of the stretch tube corresponding to a joint between an end face of the nozzle section of said motor case and an end face of the diffuser, said annular groove having a plurality of water pass holes through which inner and outer peripheries of the stretch tube are communicated with each other, so that high temperature reactor water in the pressure vessel entering through the joint between the end face of the nozzle section of the motor case and the end face of the diffuser is made to merge into said purge water so as to be returned into the pressure vessel again.

3. An internal pump comprising:
a pressure vessel housing a nuclear reactor;
a motor case comprising a section housing a motor for driving an impeller and a nozzle section extending from said motor housing section and installed at the bottom of said pressure vessel penetrating through the bottom of said pressure vessel, said nozzle section having a smaller diameter than said motor housing section;
a diffuser surrounding said impeller and disposed on said nozzle section of said motor case;
a stretch tube inserted in said nozzle section of said motor case for fixing said diffuser on said nozzle section of said motor case; and
a pump shaft inserted in said stretch tube for connecting said impeller to said motor, purge water being made to flow through between said pump shaft and said stretch tube,
wherein an annular groove is formed in a portion of an inner peripheral edge of each of the nozzle section of the motor case and the diffuser corresponding to a joint between an end face of the nozzle section of said motor case and an end face of the diffuser, and a plurality of water pass holes, through which inner and outer peripheries of the stretch tube are communicated with each other, are formed in those portions of the stretch tube corresponding to said annular grooves, so that high temperature reactor water in the pressure vessel entering through the joint between the end face of the nozzle section of the motor case and the end face of the diffuser is made to merge into said purge water so as to be returned into the pressure vessel again.

4. An internal pump comprising:
a pressure vessel housing a nuclear reactor;
a motor case comprising a section housing a motor for driving an impeller and a nozzle section extending from said motor housing section and installed at the bottom of said pressure vessel penetrating through the bottom of said pressure vessel, said nozzle section having a smaller diameter than said motor housing section;
a diffuser surrounding said impeller and disposed on said nozzle section of said motor case;
a stretch tube inserted in said nozzle section of said motor case for fixing said diffuser on said nozzle section of said motor case; and
a pump shaft inserted in said stretch tube for connecting said impeller to said motor, purge water being made to flow through between said pump shaft and said stretch tube,
wherein an annular groove is formed in a portion of an inner peripheral edge of the diffuser corresponding to a joint between an end face of the nozzle section of said motor case and an end face of the diffuser, and a plurality of water pass holes, through which inner and outer peripheries of the stretch tube are communicated with each other, are formed in those portions of the stretch tube corresponding to said annular groove, so that high temperature reactor water in the pressure vessel entering through the joint between the end face of the nozzle section of the motor case and the end face of the diffuser is made to merge into said purge water so as to be returned into the pressure vessel again.

5. An internal pump comprising:
a pressure vessel housing a nuclear reactor;
a motor case comprising a section housing a motor for driving an impeller and a nozzle section extending from said motor housing section and installed at the bottom of said pressure vessel penetrating through the bottom of said pressure vessel, said nozzle section having a smaller diameter than said motor housing section;
a diffuser surrounding said impeller and disposed on said nozzle section of said motor case;
a stretch tube inserted in said nozzle section of said motor case for fixing said diffuser on said nozzle section of said motor case; and
a pump shaft inserted in said stretch tube for connecting said impeller to said motor, purge water being made to flow through between said pump shaft and said stretch tube,
wherein an annular groove is formed in a portion of an inner peripheral edge of the nozzle section of the motor case corresponding to a joint between an end face of the nozzle section of said motor case and an end face of the diffuser, and a plurality of water pass holes, through which inner and outer peripheries of the stretch tube are communicated with each other, are formed in those portions of the stretch tube corresponding to said annular groove, so that high temperature reactor water in the pressure vessel entering through the joint between the end face of the nozzle section of the motor case and the end face of the diffuser is made to merge into said purge water so as to be returned into the pressure vessel again.

6. An internal pump comprising:
a pressure vessel housing a nuclear reactor;
a motor case comprising a section housing a motor for driving an impeller and a nozzle section extending from said motor housing section and installed at the bottom of said pressure vessel penetrating through the bottom of said pressure vessel, said nozzle section having a smaller diameter than said motor housing section;
a diffuser surrounding said impeller and disposed on said nozzle section of said motor case;
a stretch tube inserted in said nozzle section of said motor case for fixing said diffuser on said nozzle section of said motor case; and
a pump shaft inserted in said stretch tube for connecting said impeller to said motor, purge water being made to flow through between said pump shaft and said stretch tube,
wherein an annular groove is formed in an end face of said diffuser at a joint between an end face of the nozzle section of said motor case and said end face of said diffuser, a seal member being fitted in said annular groove, another annular groove is formed in a portion of an inner peripheral edge of the diffuser corresponding to said joint between the end face of the nozzle section of said motor case and the end face of the diffuser, and a plurality of water pass holes, through which inner and outer peripheries of the stretch tube are communicated with each other, are formed in those portions of the stretch tube corresponding to said another annular groove, said plurality of water pass holes being arranged in a zigzag manner in the circumferential direction of the stretch tube, so that high temperature reactor water in the pressure vessel entering through the joint between the end face of the nozzle section of said motor case and the end face of the diffuser is made to merge directly into the purge water flowing through between the pump shaft and said stretch tube so as to be returned into the pressure vessel again.
